# FASCICULE DE BREVET EUROPEEN

(11) **EP 2 465 913 B1**
(45) Date de publication et mention de la délivrance du brevet: **05.03.2014**
(21) Numéro de dépôt: 11290517.9
(22) Date de dépôt: 08.11.2011
(51) Int. Cl.: C10G 45/02, B01D 53/14, B01D 53/52

(54) **Procédé d'hydrotraitement de coupes pétrolières incluant un circuit de pompe à chaleur**
Verfahren zur Hydrierung von Erdölfraktionen beinhaltend einen Wärmepumpenkreislauf
Process for hydrotreating petroleum fractions comprising a heat pump circuit

(30) Priorité: 14.12.2010 FR 1004875
(43) Date de publication de la demande: 20.06.2012
(73) Titulaire: IFP Energies nouvelles, 92852 Rueil-Malmaison Cedex (FR)
(72) Inventeur: Giroudiere, Fabrice, 69530 Orlienas (FR); Guillou, Florent, 69360 Ternay (FR)

(56) Documents cités:
- WO-A1-2006/118795
- FR-A1- 2 464 744
- US-A- 2 614 066
- DIEZ E ET AL: "Economic feasibility of heat pumps in distillation to reduce energy use", APPLIED THERMAL ENGINEERING, PERGAMON, OXFORD, GB, vol. 29, no. 5-6, 1 avril 2009 (2009-04-01), pages 1216-1223, XP025897131, ISSN: 1359-4311, DOI: DOI:10.1016/J.APPLTHERMALENG.2008.06.013 [extrait le 2008-06-20]

## Description

### DOMAINE DE L'INVENTION

La présente invention se situe dans le domaine des procédés de raffinage et de pétrochimie faisant appel à des colonnes à distiller. Ce domaine est très vaste et, de manière préférée, la présente invention s'applique au domaine plus restreint des procédés d'hydrotraitement ou d' hydrodésulfuration de coupes pétrolières.

La présente invention ne concerne pas l'aspect réactionnel ou catalytique desdits procédés mais leur aspect énergétique. Les opérations de séparation physique des constituants, telles que la distillation, sont des opérations très consommatrices d'énergie. Il faut fournir l'énergie nécessaire à la mise en ébullition du mélange pour en séparer les constituants. L'efficacité de la séparation, dans le cas de composé proches dans leur nature, donc difficiles à séparer, est généralement accrue par l'augmentation du reflux de la colonne.

Cette augmentation du reflux consiste à recycler une partie plus ou moins importante de l'effluent produit en tête de colonne pour le réinjecter dans la colonne à l'état liquide. Cela se traduit par une énergie supplémentaire à fournir en fond de colonne pour rebouillir cet inventaire de produit supplémentaire.

Par ailleurs, l'effluent en tête de colonne doit être condensé pour être récupéré liquide. Cette condensation peut se faire en faisant appel à un aéroréfrigérant, c'est à dire un échangeur utilisant comme fluide de refroidissement de l'air ambiant, qui permet pour un faible coût énergétique de dissiper l'excès de chaleur dans l'atmosphère. L'inconvénient de ce type d'échangeur est alors que la chaleur n'est pas valorisée. Dans d'autres cas, cette condensation par aéroréfrigérant n'est que partiellement possible du fait de la basse température demandée, puisque la température du fluide à condenser ne peut être inférieure à celle de l'air ambiant. Dans le domaine du raffinage ou de la pétrochimie, on a souvent recours à de la vapeur comme fluide caloporteur, notamment dans les échangeurs. Dans un échangeur typique de raffinerie, de la vapeur généralement surchauffée se condense et cède sa chaleur au fluide à réchauffer. Cette vapeur peut être issue d'une chaudière dédiée dans laquelle, le plus souvent, on effectue la combustion d'un hydrocarbure tel que le gaz naturel par exemple. Cette combustion produit du gaz carbonique (CO2) qui va contribuer aux émissions de gaz à effet de serre (GES) du site sur lequel est implantée l'unité de distillation.

Dans le cas où l'air n'est pas suffisant pour refroidir l'effluent en tête de colonne, il est nécessaire d'avoir recours à la réfrigération par de l'eau, si l'on en dispose en quantité suffisante, ou par l'intermédiaire de groupes froids qui, moyennant une dépense énergétique plus ou moins importante, permettent de disposer d'eau glacée. Il en résulte là aussi des émissions non négligeables de GES.

Une solution pour limiter ces émissions de GES est, selon la présente invention, d'implanter un circuit de pompe à chaleur entre le rebouilleur de la colonne à distiller et l'aéroréfrigérant dont l'intérêt est double :
- d'une part refroidir le flux considéré, à des températures non atteignables par aéroréfrigération,
- d'autre part valoriser la chaleur échangée au niveau du rebouilleur de la colonne à distiller, en relevant son niveau de température.

Un autre domaine d'application de la présente invention est celui des échangeurs dits charge - effluent souvent utilisés pour préchauffer la charge dans divers procédés de raffinage.

Pour les procédés faisant appel à des températures relativement élevées, notamment les procédés mettant en oeuvre une réaction exothermique, on a souvent recours à un échange charge- effluent, la charge étant préchauffée par l'effluent chaud. Or cet échange charge - effluent est limité par le phénomène de croisement : une charge ne pourra pas être réchauffée au delà de la température à laquelle est disponible l'effluent.

L'implantation d'une pompe à chaleur dans ce cas permet de dépasser cette limitation en déplaçant les niveaux de température au delà des températures de croisement.

### EXAMEN DE L'ART ANTERIEUR

La principale application des pompes à chaleur est le chauffage de bâtiments soit individuels soit industriels, par exemple par la fourniture de chaleur à un réseau d'eau chaude, ou le chauffage d'une serre pour la culture de végétaux. Le principe de la pompe à chaleur étant le transport de calories entre deux milieux, d'un milieu "froid" vers un milieu "chaud", le fonctionnement en fourniture de froid est possible. C'est ainsi qu'une autre application des pompes à chaleur est la climatisation de bâtiments.

Dans un cas comme dans l'autre, l'effet généralement recherché par l'implantation d'une pompe à chaleur, est l'économie d'énergie et/ou le gain économique par rapport à un autre mode de chauffage, une chaudière au fioul par exemple. En effet, les pompes à chaleur sont caractérisées par un coefficient de performances qui correspond à la quantité d'énergie nécessaire au transport d'une quantité d'énergie entre un milieu chaud et un milieu froid, ou inversement. Plus l'écart de température entre les deux milieux est faible, meilleur sera la performance, et plus grande sera l'économie d'énergie.

C'est la raison pour laquelle on utilise avantageusement les pompes à chaleur dans les applications de chauffage/climatisation pour lesquelles la différence de température entre la température souhaitée du bâtiment à climatiser et celle du milieu extérieur qui va fournir ou absorber les calories (nappe phréatique, atmosphère, lithosphère) est généralement faible, de l'ordre de la dizaine de degré Celsius.

Dans le cas des procédés de raffinage et de pétrochimie, et en particulier pour les applications de type hydrotraitement des gasoils, la situation peut se résumer de la manière suivante:
On souhaite désulfurer par hydrotraitement une charge de gasoil initialement chaude, à environ 130 °C, dans un procédé fonctionnant pour partie à basse température. En effet, la charge doit être refroidie à environ 50 °C, mais d'un autre côté, de grandes quantités d'énergie à environ 130 °C sont nécessaires pour la régénération du solvant.

L'écart de température entre, d'une part, la charge refroidie et, d'autre part, la température nécessaire à la régénération du solvant, est donc d'environ 80 °C.

C'est pourquoi dans un contexte d'énergie bon marché, cette application n'est pas jugée intéressante du point de vue des performances d'une pompe à chaleur, car la fourniture de chaleur au moyen d'une chaudière classique par combustion d'hydrocarbure fossile est la solution la plus simple et la plus économique, la chaleur de la charge à refroidir étant dissipée directement dans l'atmosphère par des aéroréfrigérants.

Au contraire, dans un contexte de tension énergétique, il peut s'avérer qu'une pompe à chaleur soit une solution rentable malgré un coefficient de performance peu élevé, plus particulièrement encore dans le cas où l'on s'intéresse aux émissions spécifiques de gaz à effet de serre pour lesquels les pompes à chaleur offrent un bon potentiel de réduction.

La présente invention décrit précisément l'implantation d'une pompe à chaleur dans ce contexte et en montre l'intérêt énergétique.

En effet, une telle implantation permet à la fois de valoriser une quantité considérable de chaleur (qui serait selon l'art antérieur dissipée dans l'atmosphère), d'améliorer l'efficacité du refroidissement tout en réduisant la surface requise au niveau de l'aéroréfrigérant, et enfin de fournir l'intégralité de la chaleur requise pour la régénération du solvant avec un bilan carbone intéressant.

### DESCRIPTION SOMMAIRE DES FIGURES

La figure 1 représente un schéma de procédé d'hydrotraitement d'une coupe gazole selon l'art antérieur.
La figure 2 selon l'invention, représente le même schéma de procédé muni d'un circuit de pompe à chaleur qui permet d'améliorer son efficacité énergétique.

### DESCRIPTION SOMMAIRE DE L'INVENTION

La présente invention peut se définir comme un procédé amélioré d'hydrotraitement de coupes pétrolières qui intègre une séparation hydrogène / hydrogène sulfuré au moyen d'une unité de traitement aux amines.

Plus précisément, le procédé selon l'invention est un procédé d'hydrotraitement d'une coupe pétrolière thermiquement couplé à un procédé de traitement aux amines, permettant de séparer l'hydrogène de l'hydrogène sulfuré, dans lequel le procédé d'hydrotraitement possède un échangeur (1007) permettant de refroidir l'effluent du réacteur d'hydrotraitement jusqu'à une température d'environ 50°C, ledit procédé de traitement aux amines possède une section de régénération de ladite amine faisant appel à une colonne à distiller (1009) muni d'un rebouilleur (1010) fonctionnant à une température d'environ 130°C.

L'échangeur de chaleur (1007) joue le rôle de source froide et le rebouilleur (1010) joue le rôle de source chaude. Les notions de source chaude et source froide sont ici prises dans le sens usuel de l'ordre des températures. Il arrive que la terminologie soit inversée dans le contexte des pompes à chaleur, mais ceci est une simple question de convention.

Le procédé selon l'invention établit un circuit de pompe à chaleur entre la source froide et la source chaude au moyen d'un fluide caloporteur circulant entre le rebouilleur (1010) et l'échangeur (1007) selon le circuit suivant:
le fluide caloporteur (208) s'évapore dans l'échangeur (1007) en extrayant les calories de l'effluent réactionnel (111) pour produire une vapeur (209) dont la température et la pression sont augmentées par le compresseur (1011), le flux vapeur haute pression et haute température (206) issue du compresseur (1011) est condensé dans le rebouilleur (1010) duquel est produit un flux liquide sous pression (207) dont la température est abaissée par détente dans la vanne (1012), le liquide résultant (208) est alors partiellement vaporisé et retourne à l'échangeur (1007) sous forme d'un mélange liquide vapeur.

### DESCRIPTION DETAILLEE DE L'INVENTION

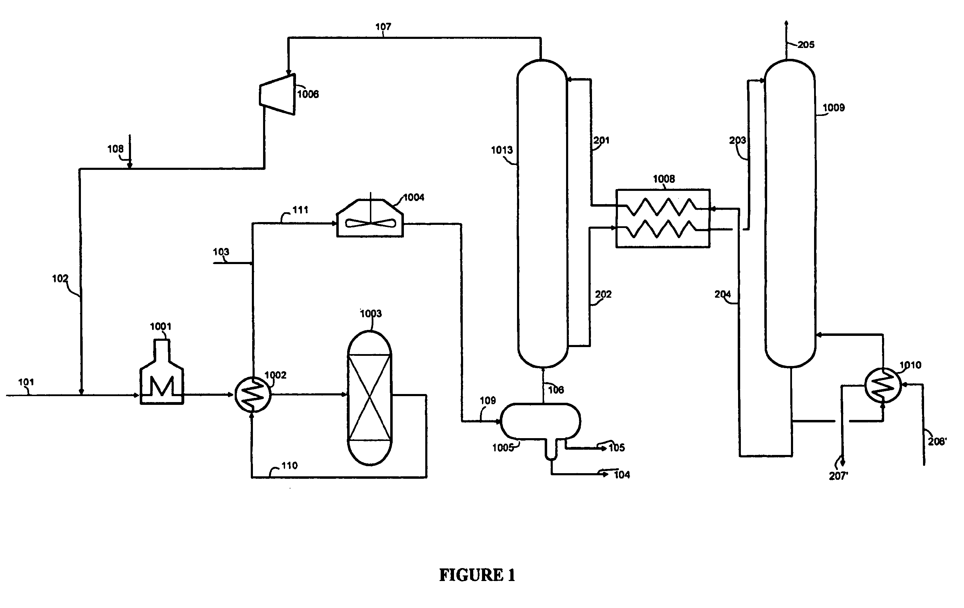

La bonne compréhension de l'invention nécessite un rappel du schéma d'un hydrotraitement de coupe pétrolière selon l'art antérieur tel que représenté sur la figure 1.

Le schéma d'hydrotraitement, par exemple d'une coupe gasoil, est complété par une unité d'élimination des gaz acides par une amine, dite unité aux amines.

On dispose d'une charge (101) de gasoil à hydrotraiter. Celle charge (101) est issue de la distillation d'un pétrole brut et est additionnée avec de l'hydrogène (102).

Le mélange charge (101) et hydrogène (102) est réchauffé dans un four (1001).

Ce four (1001) permet d'élever la température à un niveau tel qu'après l'apport de chaleur supplémentaire de l'échangeur charge effluent (1002), la charge soit à la température requise pour l'hydrotraitement effectué dans le réacteur (1003).

Dans le réacteur d'hydrotraitement (1003) sous haute pression (environ 150 bars) et haute température (environ 500°C), le soufre est extrait de la charge sous forme gazeuse H2S. L'effluent chaud (110) issu du réacteur d'hydrotraitement (1003) est refroidi au contact de la charge par passage dans un échangeur charge effluent (1002).

L'effluent refroidi (111) est complété par un apport d'eau de lavage (103) et est encore refroidi dans l'aéroréfrigérant (1004). Il en résulte un flux à basse température (109) qui est séparé dans un ballon séparateur (1005) en trois flux :
- le produit principal (105) à savoir le gasoil désulfuré,
- un effluent liquide aqueux (104) constituée des eaux de lavage acides et,
- un effluent gazeux (106) composé d'H₂ et d'H₂S. Il subsiste dans cet effluent gazeux (106) une part importante d'hydrogène qui peut encore être valorisé par recyclage, mais cela nécessite de séparer H2 et H₂S. Cette séparation H2/H2S est opérée dans un absorbeur (1013) par une solution d'amines pauvre, c'est-à-dire faiblement chargée en H2S (201). Il en résulte un flux d'hydrogène (107) purifié qui, après recompression dans le compresseur (1006), est complété par un appoint d'hydrogène (108) pour atteindre la quantité d'hydrogéner nécessaire à la réaction d'hydrotraitement. Le rapport massique H2./charge entre l'hydrogène et la charge à traiter au niveau du réacteur (1003) est préférentiellement compris entre 0,3 et 0,8% poids.

Le flux (102) est envoyé au contact de la charge (101).

L'effluent liquide (202) issu de l'absorbeur (1013) est constitué de l'amine chargée d'H2S (amine riche).

La régénération de l'amine est réalisée à plus haute température que l'absorption. Cette régénération nécessite un échangeur charge - effluent (1008) permettant de réchauffer l'amine riche et de refroidir l'amine pauvre. L'amine riche réchauffée (203) est introduite dans le régénérateur (1009) dans lequel la chaleur apportée au niveau du rebouilleur (1010) permet de produire un effluent gazeux (205) constitué majoritairement d'H2S et un effluent liquide (204) d'amine régénérée, c'est à dire appauvrie en H2S (amine pauvre). Cet effluent chaud (204) est renvoyé vers l'absorbeur (1013) après avoir été refroidi en cédant ses calories au flux d'amine riche (202) dans l'échangeur charge effluent (1008).

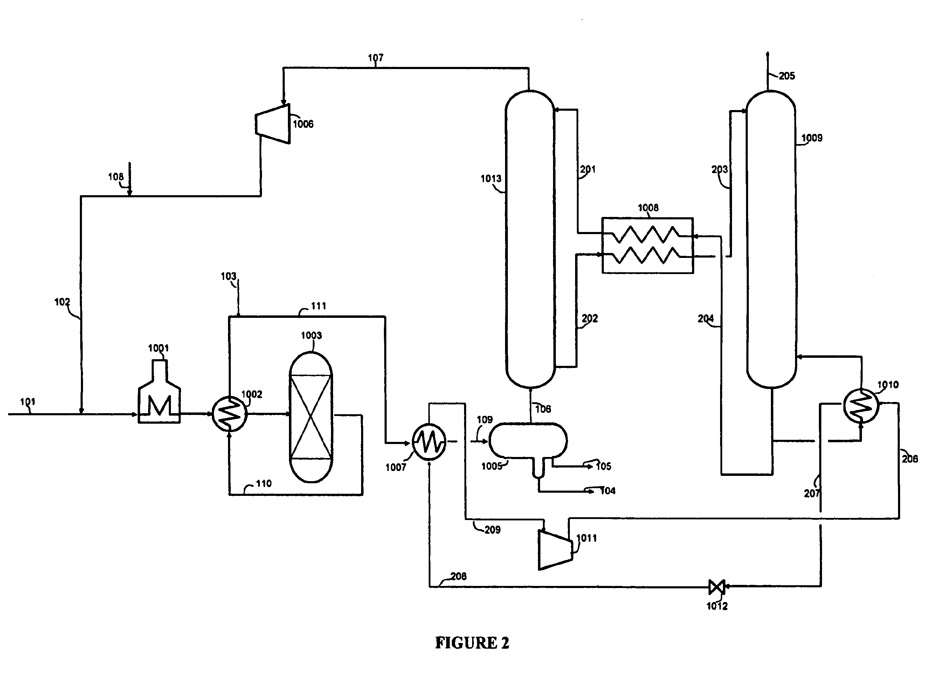

La description du schéma selon la présente invention s'appuie sur la figure 2 qui introduit le circuit, appelé ci-après circuit pompe à chaleur, qui fait appel à un fluide caloporteur (206, 207, 208, 209).

Le circuit de pompe à chaleur se situe entre l'échangeur (1007) et le rebouilleur (1010) de la colonne à distiller (1009). L'échangeur (1007) remplace l'aérorefrigérant (1004) selon le schéma de l'art antérieur.

Ce fluide caloporteur (209) est vapeur à la sortie de l'échangeur (1007) jusqu'à l'entrée du rebouilleur (1010), se condense au niveau du rebouilleur (1010) et devient donc liquide (207) jusqu'à l'entrée de la vanne de détente (1012). En sortie de la vanne de détente (1012) jusqu'à l'entrée de l'échangeur (1007), le fluide caloporteur (208) est à l'état liquide vapeur.

L'autre modification introduite par le circuit pompe à chaleur est le fait que l'échangeur (1004) servant à refroidir l'effluent du réacteur d'hydrotraitement, qui était un aeroréfrigérant selon l'art antérieur, devient un échangeur (1007) dont le fluide de refroidissement est le fluide caloporteur du circuit pompe à chaleur à l'état liquide vapeur. A la sortie de l'échangeur (1007) le fluide caloporteur (209) est entièrement vapeur.

Le circuit de la pompe à chaleur peut être décrit de la manière suivante:
La chaleur est apportée au rebouilleur (1010) par la condensation du fluide caloporteur (206) qui devient liquide (207). Le liquide (207) est détendu dans la vanne de détente (1012) et ressort à l'état liquide vapeur (208). Le fluide caloporteur (208) s'évapore entièrement dans l'échangeur (1007) en extrayant les calories de l'effluent réactionnel (111) pour produire une vapeur (209) dont la température et la pression vont être augmentées par le compresseur (1011).

La vapeur haute pression et haute température (206) issue du compresseur (1011) se condense dans le rebouilleur (1010).

Il en résulte un flux liquide sous pression (207) dont la température est abaissée par détente dans la vanne (1012). Le mélange liquide vapeur résultant (208) alimente donc l'échangeur (1007) dans lequel il se vaporise entièrement.

Dans le cadre de la présente invention le choix du fluide caloporteur peut être formulé à partir des critères suivants:
- Pour des raisons d'économie, la pression de condensation du fluide caloporteur est choisie la plus basse possible, et préférentiellement au voisinage de 1 bar (1 bar = 10⁵ Pascal).
- Plus précisément, le fluide caloporteur a, d'une part, une température d'ébullition inférieure ou égale à 60°C, et préférentiellement inférieure à 50°C pour une pression inférieure à 5 bars et préférentiellement inférieure à 2 bars, et ledit fluide caloporteur a, d'autre part, une température de condensation supérieure à 120°C, et préférentiellement supérieure à 130°C, pour une pression supérieure à 1 bar.

Le fluide caloporteur alimentant le circuit pompe à chaleur peut être choisi de manière générale dans le groupe formé par les fluides frigorifiques définis par l'IUPAC.

Le fluide caloporteur est préférentiellement choisi dans le sous groupe suivant : propane, butane, pentane ou un mélange quelconque de ces composés.

Il peut être également préférentiellement choisi dans le groupe formé par les alcools et les diols, ayant un nombre d'atomes de carbone compris entre 3 et 10, ou un mélange quelconque de ces composés.

### EXEMPLES SELON L'ART ANTERIEUR ET SELON L'INVENTION

### Exemple 1: Cet exemple est selon l'état de l'art et correspond donc à la figure 1.

L'échangeur (1004) est un aéroréfrigérant où un flux d'air refroidit le flux issu de (1002).

La chaleur est apportée au rebouilleur (1010) par l'intermédiaire d'un flux de vapeur basse pression surchauffée (206') et dont il résulte un flux de condensat (207').

On traite un flux de 265 t/h de gazole (GO) sulfuré. En entrée de l'aéroréfrigérant (1004), la température est de 128 °C, en sortie, celle-ci est de 50 °C. La dissipation d'énergie dans l'aéroréfrigérant (1004) correspond à 15,85 Gcal/h, soit un débit de 1613 t/h d'air passant de 25 à 56 °C. Gcal/h est l'abréviation de giga soit 10⁹cal/h.

Le flux de charge correspond à un flux d'amine riche (202) de 56 t/h, soit à une charge pour le rebouilleur (1010) de 2,16 Gcal/h. Cela correspond à la condensation de 12,4 t/h de vapeur basse pression.

### Exemple 2 : selon la présente invention

Cet exemple s'appuie sur la figure 2.

Le schéma de procédé selon l'invention reprend donc à l'identique la partie hydrotraitement à ceci près que l'aéroréfrigérant (1004) est remplacé par un échangeur (1007) utilisant comme fluide de réfrigération le fluide caloporteur (208) du circuit pompe à chaleur à l'état liquide vapeur. Le circuit de pompe à chaleur comporte le compresseur (1011) et la vanne de détente (1012).

En ce qui concerne le rebouilleur (1010), son réchauffage n'est plus assuré par la condensation de vapeur basse pression, mais par la condensation du fluide caloporteur (206) faisant partie de la boucle pompe à chaleur.

Le circuit de pompe à chaleur a les caractéristiques suivantes :
- fluide caloporteur : pentane
- pression et température en sortie de la vanne de détente (1012) : 1,5 bar et 48 °C
- pression et température en sortie du compresseur (1011) : 12 bar et 184 °C
- puissance du compresseur : 790 kW (rendement 76 %)
- puissance échangée à l'évaporateur (1007) : 1 673 kW
- puissance échangée au condenseur (1010) : 2 464 kW
- coefficient de performance de la pompe à chaleur : 3,12

Le circuit de pompe à chaleur au pentane permet donc de substituer intégralement le réchauffage à la vapeur du condenseur (1010), et permet en outre de réduire la consommation d'air de l'aéroréfrigérant (1004) (remplacé par l'échangeur (1007)) de 1 613 t/h à 1 198 t/h, soit une réduction de l'ordre de 26 %.

Le comparatif du bilan énergétique et CO₂ entre le schéma d'hydrotraitement selon la présente invention (figure 2) et le schéma de l'art antérieur (figure 1) peut s'établir selon une méthode qui consiste à considérer les émissions de CO₂ liées à la consommation de vapeur ou d'électricité.

Le tableau suivant donne des valeurs d'émissions CO2 couramment admises pour les émissions spécifiques en Europe, (MJ est l'abréviation de méga joules , soit 10⁶ joules).

| | |
|---|---|
| Vapeur BP 5 bar | 86 gCO₂/MJ |
| Électricité | 127 gCO₂/MJ |

Dans l'exemple 1 selon l'art antérieur, les émissions sont alors de 18 560 t/an de CO₂ en considérant une consommation de 12,4 t/h de vapeur pour le rebouilleur (1010) et de 0,1 MW d'électricité pour l'aéroréfrigérant (1004).

Dans l'exemple 2 selon l'invention, les émissions associées sont de 2 890 t/an de CO₂.

Cela correspond à la puissance électrique consommée sur 800h/an par :
- le compresseur (1011) pour 0,79 MW
- l'échangeur (1007) pour 0,07 MW

L'implantation d'un circuit de pompe à chaleur entre le condenseur (1010) et l'aéroréfrigérant (1004) conduit alors à un abattement de l'ordre de 84 % des émissions de gaz à effet de serre sur ce procédé.

## Revendications

1. Procédé d'hydrotraitement d'une coupe pétrolière, ledit procédé étant thermiquement couplé au moyen d'un circuit de pompe à chaleur à un procédé de traitement aux amines permettant de séparer l'hydrogène de l'hydrogène sulfuré, dans lequel le procédé d'hydrotraitement possède un échangeur (1007) permettant de refroidir l'effluent du réacteur d'hydrotraitement (1003) jusqu'à une température d'environ 50°C, ledit procédé de traitement aux amines possédant une section de régénération de ladite amine faisant appel à une colonne à distiller (1009) muni d'un rebouilleur (1010) fonctionnant à une température d'environ 130°C, ledit procédé d'hydrotraitement étant **caractérisé en ce qu'**il incorpore un circuit de pompe à chaleur faisant appel à un fluide caloporteur circulant entre le rebouilleur (1010) jouant le rôle de source chaude et l'échangeur (1007) jouant le rôle de source froide.

2. Procédé d'hydrotraitement d'une coupe pétrolière thermiquement couplé à un procédé de traitement aux amines selon la revendication 1, dans lequel le circuit de pompe à chaleur utilise un fluide caloporteur dont le circuit est le suivant:
le fluide caloporteur (206, 207, 208, 209) à l'état liquide vapeur (208) s'évapore dans l'échangeur (1007) en extrayant les calories de l'effluent réactionnel (111) pour produire une vapeur (209) dont la température et la pression sont augmentées par le compresseur (1011), le flux vapeur haute pression et haute température (206) issu du compresseur (1011) est condensé dans le rebouilleur (1010) en produisant un flux liquide sous pression (207) dont la température est abaissée par détente dans la vanne (1012), le liquide résultant (208) est alors partiellement vaporisé et retourne à l'échangeur (1007) sous forme d'un mélange liquide vapeur.

3. Procédé d'hydrotraitement d'une coupe pétrolière thermiquement couplé à un procédé de traitement aux amines selon l'une quelconque des revendications 1 à 2, dans lequel le fluide caloporteur (208) a une température d'ébullition inférieure ou égale à 60°C, et préférentiellement inférieure à 50°C pour une pression inférieure à 5 bars, et préférentiellement inférieure à 2 bars.

4. Procédé d'hydrotraitement d'une coupe pétrolière thermiquement couplé à un procédé de traitement aux amines selon l'une quelconque des revendications 1 à 3, dans lequel le fluide caloporteur (208) a une température de condensation supérieure à 120°C, et préférentiellement supérieure à 130°C, pour une pression supérieure à 1 bar.

5. Procédé d'hydrotraitement d'une coupe pétrolière thermiquement couplé à un procédé de traitement aux amines selon l'une quelconque des revendications 1 à 3, dans lequel le fluide caloporteur (208) alimentant le circuit pompe à chaleur est choisi dans le groupe formé par le propane, le butane, le pentane.

6. Procédé d'hydrotraitement d'une coupe pétrolière thermiquement couplé à un procédé de traitement aux amines selon l'une quelconque des revendications 1 à 3, dans lequel le fluide caloporteur (208) alimentant le circuit de pompe à chaleur est choisi dans le groupe formé par les alcools et les diols, ayant un nombre d'atomes de carbone compris entre 3 et 10.

## Patentansprüche

1. Verfahren zum Hydrieren eines Erdölschnitts, wobei das Verfahren mithilfe eines Wärmepumpenkreislaufs mit einem Verfahren zur Aminbehandlung, das es ermöglicht, den Wasserstoff von dem Schwefelwasserstoff zu trennen, thermisch gekoppelt ist, wobei das Verfahren zum Hydrieren einen Tauscher (1007) aufweist, der es ermöglicht, den Abfluss des Hydrierungsreaktors (1003) bis auf eine Temperatur von etwa 50 °C abzukühlen, wobei das Verfahren zur Aminbehandlung einen Abschnitt zur Regeneration des Amins aufweist, der eine Destillationskolonne (1009) nutzt, die mit einem Verdampfer (1010) versehen ist, der bei einer Temperatur von etwa 130 °C arbeitet, wobei das Verfahren zur Hydrierung **dadurch gekennzeichnet ist, dass** es einen Wärmepumpenkreislauf integriert, der ein Wärmeübertragungsfluid nutzt, das zwischen dem Verdampfer (1010) zirkuliert und die Rolle der Wärmequelle einnimmt und der Tauscher (1007) die Rolle der Kältequelle einnimmt.

2. Verfahren zum Hydrieren eines Erdölschnitts, das thermisch mit einem Verfahren zur Aminbehandlung gekoppelt ist, nach Anspruch 1, wobei der Wärmepumpenkreislauf ein Wärmeübertragungsfluid verwendet, dessen Kreislauf wie folgt abläuft:
Das Wärmeübertragungsfluid (206, 207, 208, 209) in einem flüssigen/dampfförmigen Zustand (208) verdampft im Tauscher (1007),
indem es die Kalorien des Reaktionsabflusses (111) extrahiert, um einen Dampf (209) zu erzeugen, dessen Temperatur und Druck durch den Verdichter (1011) erhöht werden, der Hochdruck- und
Hochtemperaturdampfstrom (206) aus dem Verdichter (1011) wird in dem Verdampfer (1010) kondensiert und erzeugt dabei einen druckbeaufschlagten flüssigen Strom (207), dessen Temperatur durch Entspannung in dem Ventil (1012) abgesenkt wird, wobei die resultierende Flüssigkeit (208) dann teilweise verdampft und in den Tauscher (1007) in Form eines flüssigen/dampfförmigen Gemischs zurückgeführt wird.

3. Verfahren zur Hydrierung eines Erdölschnitts, das thermisch mit einem Verfahren zur Aminbehandlung gekoppelt ist, gemäß einem der Ansprüche 1 bis 2, wobei das Wärmeübertragungsfluid (208) eine Siedetemperatur kleiner oder gleich 60 °C und bevorzugt kleiner als 50 °C bei einem Druck von weniger als 5 bar und bevorzugt weniger als 2 bar aufweist.

4. Verfahren zur Hydrierung eines Erdölschnitts, das thermisch mit einem Verfahren zur Aminbehandlung gekoppelt ist, gemäß einem der Ansprüche 1 bis 3, wobei das Wärmeübertragungsfluid (208) eine Kondensationstemperatur von größer als 120 °C und bevorzugt größer als 130°C bei einem Druck von mehr als 1 bar aufweist.

5. Verfahren zur Hydrierung eines Erdölschnitts, das thermisch mit einem Verfahren zur Aminbehandlung gekoppelt ist, gemäß einem der Ansprüche 1 bis 3, wobei das Wärmeübertragungsfluid (208), das den Wärmepumpenkreislauf versorgt, ausgewählt ist aus der Gruppe gebildet aus Propan, Butan, Pentan.

6. Verfahren zur Hydrierung eines Erdölschnitts, das thermisch mit einem Verfahren zur Aminbehandlung gekoppelt ist, gemäß einem der Ansprüche 1 bis 3, wobei das Wärmeübertragungsfluid (208), das den Wärmepumpenkreislauf versorgt, ausgewählt ist aus der Gruppe, gebildet aus Alkoholen und Diolen, die eine Anzahl an Kohlenstoffatomen im Bereich zwischen 3 und 10 aufweisen.

## Claims

1. Process for hydrotreatment of a petroleum fraction, said process being thermally coupled to an gamine treatment process by use of a heat pump circuit allowing to separate hydrogen from hydrogen sulfide, in which process the hydrotreatment process has an exchanger (1007) that makes it possible to cool the effluent of the hydrotreatment reactor (1003) to a temperature of approximately 50°C, whereby said amine treatment process has a cross-section for regeneration of said amine that employs a distillation column (1009), equipped with a reboiler (1010) that operates at a temperature of approximately 130°C, and whereby said hydrotreatment process is **characterized in that** it incorporates a heat pump circuit that employs a coolant circulating between the reboiler (1010) that plays the role of a hot source and the exchanger (1007) that plays the role of a cold source.

2. Process for hydrotreatment of a petroleum fraction that is thermally coupled to an amine treatment process according to Claim 1, wherein the heat pump circuit uses a coolant whose circuit is as follows:
The coolant (206, 207, 208, 209) in the liquid-vapor state (208) evaporates in the exchanger (1007) by extracting the calories of the reaction effluent (111) for producing a vapor (209) whose temperature and pressure are increased by the compressor (1011); the high-pressure and high-temperature vapor stream (206) obtained from the compressor (1011) is condensed in the reboiler (1010) by producing a pressurized liquid stream (207) whose temperature is lowered by expansion in the valve (1012); and the resulting liquid (208) is then partially vaporized and returns to the exchanger (1007) in the form of a liquid-vapor mixture.

3. Process for hydrotreatment of a petroleum fraction that is thermally coupled to an amine treatment process according to any of Claims 1 to 2, wherein the coolant (208) has a boiling point that is less than or equal to 60°C, and preferably less than 50°C for a pressure that is less than 5 bar, and preferably less than 2 bar.

4. Process for hydrotreatment of a petroleum fraction that is thermally coupled to an amine treatment process according to any of Claims 1 to 3, wherein the coolant (208) has a condensation temperature that is greater than 120°C and preferably greater than 130°C, for a pressure that is greater than 1 bar.

5. Process for hydrotreatment of a petroleum fraction that is thermally coupled to an amine treatment process according to any of Claims 1 to 3, wherein the coolant (208) that supplies the heat pump circuit is selected from the group that is formed by propane, butane, and pentane.

6. Process for hydrotreatment of a petroleum fraction that is thermally coupled to an amine treatment process according to any of Claims 1 to 3, wherein the coolant (208) that supplies the heat pump circuit is selected from the group that is formed by alcohols and diols, having a carbon atom number of between 3 and 10.
